# NEW EUROPEAN PATENT SPECIFICATION

(11) **EP 2 117 324 B2**
(45) Date of publication and mention of the opposition decision: **27.05.2015**
(45) Mention of the grant of the patent: 24.11.2010
(21) Application number: 07743234.2
(22) Date of filing: 02.05.2007
(51) Int. Cl.: A22B 5/20, A22C 17/00

(54) **CUTTER MECHANISM AND MEAT CUTTING APPARATUS**
SCHNEIDMECHANISMUS UND FLEISCHSCHNEIDEVORRICHTUNG
MÉCANISME DE DÉCOUPE ET APPAREIL DE DÉCOUPE DE VIANDE

(30) Priority: 06.02.2007 JP 2007026319
(43) Date of publication of application: 18.11.2009
(73) Proprietor: Mayekawa Mfg. Co., Ltd., Koto-ku Tokyo 135-8482 (JP)
(72) Inventor: UMINO, Tatsuya, Tokyo 135-8482 (JP); KOZU, Shozo, Tokyo 135-8482 (JP)
(74) Representative: advotec.
(86) International application number: PCT/JP2007/059799
(87) International publication number: WO 2008/096460

(56) References cited:
- WO-A-01/67873
- WO-A-91/04670
- DE-A1-102004 024 077
- DE-C1- 19 650 254
- US-B1- 6 988 434

## Description

### Technical field

The present invention relates to a meat cutting apparatus utilizing a cutter mechanism for cutting an arm or leg part of a slaughtered animal used for food along bones in the meat block in longitudinal direction of the bones, with which the cutting operation can be automated without need to depend on manual operation such a mechanism/apparatus is known from DE 196 50 254 C1.

### Background art

The inventors of this application proposed a semiautomated pig thigh de-boning apparatus and method of de-boning a pig leg using the apparatus in Japanese Laid-Open Patent Application Publication No.2000-106818 (patent literature 1). In the de-boning apparatus, preprocessing, lower thigh bone remove processing, and thigh bone remove processing are carried out while the ankle part of a pig leg is held by a clamper attached to a transfer chain and transferred in a hanged state through each station.

All processing is performed with the work (object to be processed) being hanged from a clamper and stabilized in order to minimize influence of the work's own weight, and operation on a cutting board is eliminated in order to prevent microbes from adhering to the work to perform sanitary de-boning operation. Manual operation is limited to preprocessing operation, and labor-saving and increased-efficiency de-boning operation was realized.

In the preprocessing step, the hipbone and tailbone are removed and incision is made to the meat along the lower thighbones (tibia and fibula) and thighbone by a worker while the work is transferred hanging from the clamper. In the succeeding automated step, the pig leg (work) hanging from the clamper is made incision around the lower thigh and thigh with a cutter while scraping off the meat adhering to the bones with a meat separator. By this, biological tissue such as meat, tendon, ligament, etc. adhering to the bones is cut, and meat is separated from the bones step by step. These incisions are made at determined positions in longitudinal direction of the bones by rotating the work.

Further, the inventors disclosed a method and apparatus for cutting and removing meat from bone laden meat with a cutter in Japanese Laid-Open Patent Application Publication No.2004-321032 (patent literature 2).

Document US 2004/0031400 A1 teaches a device for deboning meat slabs for cutlets wherein the device comprises features for determining the length of the meat slab. Document US 3,992,134 B discloses a plant for semi-automatically deboning meat of a half cracas that also includes measuring devices for determining the length.

Document JP 2004-236577 concerns a method and system for deboning meat, for which a non contact sensor is applied to determine whether a meat block is a right or left side for subsequently treating the meat block with different device features depending on the determined side of the meat block.

According to this invention, a cutter and a cutter guide covering the cutter and protruding from the cutting edge of the cutter are moved toward the bone in the meat, contact of the end of the cutter guide with the bone is detected, and the cutter is moved so that the cutting edge thereof travels along the vicinity of the surface of the bone, thereby cutting and removing the meat from the bones.

### Disclosure of Invention

However, in the de-boning apparatus disclosed in the patent literature 1, incision is made manually to the lower thighbone and thigh bone, and automation level is not so high. When making incision along the lower thighbones and thighbones in longitudinal direction thereof, it is necessary to manipulate the cutter not to bite into the surfaces of the bones, whereas bone profiles are complicated 3-dimentionally having bending and twisted parts, so it has been difficult to automate incision making along the profiles of bones while keeping depth of incision appropriately.

In the de-boning apparatus disclosed in the patent literature 2, a cutter guide provided to a cutter is allowed to contact a bone and the cutter travel is controlled based on the signal from the cutter guide. Therefore, the apparatus is suited when cutting and separating biological tissue such as meat, tendon, ligament, etc. adhering on a bone by pressing the cutter against the bone laden meat and moving around the bone. However, it is not suited for making incision to the meat adhering on the bone by moving the cutter along the surface of the bone in longitudinal direction of the bone.

Under the circumstances, incision making to the meat of bone laden meat along the surface of the bone has not been automated in the past, and it has been performed manually.

The present invention was made on light of problems mentioned above, and aims to realize a meat cutting apparatus using a cutter mechanism, with which incision making necessary in de-boning operation of bone laden meat of a slaughtered domestic animal, for example a pig leg, and performed manually in the past, is automated, and automation level of de-boning operation is increased, resulting in increased operation efficiency, at the same time, in improved yield of meat.

To attain the object, the present invention proposes a meat cutting apparatus according to claim 1.

It has been common to use a cutter attached to a multi-axis multi-joint robot arm and allow the cutter to track a trajectory defined beforehand in a cutter operation program when automating cutting process along a relatively complicated line.

However, in cutting operation for removing bones in bone laden meat, individual bone laden meat differs in size, so incision trajectory must be varied in accordance with individual bone laden meat. Therefore, accurate incision can not be carried out with a predetermined cutting trajectory.

To deal with this , the meat cutting apparatus of the invention comprising a cutter mechanism is provided with, as described above, a cutter drive device, a slide mechanism, and elastic force urging means to compensate for errors between a cutting trajectory defined beforehand and actual trajectory to be tracked by the cutter for accurate incision making. The cutter is operated by the cutter drive means under a preset cutting operation program. The initial position of starting incision by the cutter is set in the program so that the cutter is brought into contact with the surface of the bone in the bone laden meat.

An error between the initial position defined by the program and actual position of the surface of the bone is compensated by allowing the swing mechanism to which the cutter is supported swingablly to slide on the slide mechanism in direction crossing cutter travel direction by the contact of the cutter with the surface of the bone. Then the cutter is moved to make incision along the bone in longitudinal direction of the bone while being compensated for difference between the surface of the bone and the programmed trajectory by means of the slide mechanism.

In the meat cuting apparatus of the invention, as the cutter is mounted to the supporting arm via the swing shaft of the swing mechanism and via the sliding mechanism such that the cutter is located at a position advanced toward travel direction of the cutter, when the supporting arm is moved so that the swing axis of the cutter travels along the bone, the cutter is swung by receiving reaction force from the bone so that the cutting edge thereof runs along the surface of the bone.

In this way, when the supporting arm is moved under the cutting operation program, the cutting edge of the cutter runs along the bone while compensating for trajectory difference between the programmed one and actual one by means of the sliding mechanism and swing mechanism, thus the meat adhering on the surface of the bone is separated from the surface.

In the meat cutting apparatus, said slide mechanism has a linear guide extending perpendicular to the robot arm and crossing the travel direction of the cutter, said swing mechanism being mounted on the linear guide, and said elastic force exerting means consists of springs provided in both sides of said swing mechanism having said swing shaft to allow the swing mechanism to remain at a position when no force exerts on the swing mechanism in its sliding direction.

By shaping the cutter to be of double-edged, incision along the bones can be made from both sides of the cutter.

According to the meat cutting apparatus of the invention, it is possible to make accurate incision to the meat of bone laden meat along the bones in longitudinal direction thereof to separate the biological tissuess adhering to the surface of the bones without permitting the cutter to bite into the bones not only when cutting the biological tissues by moving the cutter in circumference direction of the bones - The meat cutting apparatus according to the invention for making incision along surfaces of bones of a bone laden meat of a slaughtered domestic animal includes a cutter mechanism as described above, a discrimination means for detecting what part of the slaughtered animal the bone laden meat is and its size, a plurality of cutting operation programs in each of which is defined beforehand a cutter movement trajectory in correspondence with the part and size of the bone laden meat, and a selecting means for selecting a program which corresponds with the part and size detected by the discrimination means from the programs; by which the cutter mechanism is driven under the selected program.

In the apparatus according to the invention, a plurality of cutting operation programs are prepared beforehand, what part of the slaughtered animal the bone laden meat is and its size is detected by the discrimination means, a cutting operation program is selected from the plural programs based on the result of the detection, and the supporting arm of the cutter is driven by the cutter drive device under the selected grogram, so the cutter is manipulated to track nearly along the actual profiles of the bones.

For example, when processing an arm or leg part of a slaughtered domestic animal, whether it is a right arm (leg) or left arm (leg) is detected, and its representative size (for example, when it is a leg part, length from its ankle part clamped with the clamper to its femoral head is detected, then a program is selected based on the result of detection.

However, the selected program does not correspond exactly with the profiles of the bones of the bone laden meat to be treated because of individual difference in size and shape of the bone laden meat. To cope with this, according to the invention, a swing mechanism, slide mechanism, and elastic force urging means as mentioned above are provided to compensate for the difference.

For example, when processing a pig leg part, it is preferable to compose the discrimination means such that it includes; a discrimination device which has a plate supported swingablly and capable of being moved upward from below the pig leg part hanged from a clamper with its ankle clamped with the clamper so that the fat layer side of the thigh part always faces toward a determined direction, whereby the discrimination device detect swung direction of the plate when the plate is moved upward with the center of swing of the plate running along the vertical center line of the thigh part hanging from the clamper and swing upon contacting the femoral head of the thigh part and discriminate whether the thigh part is a right thigh part or left thigh part based on the detected swung direction, and a work length detecting means for calculating length of the pig leg part based on lifted distance of the plate until the plate comes to contact with the femoral head; and a program which can correspond with the result of detection is selected from among the plural programs. The selected program is the one under which the cutter is manipulated to track the most nearly along the actual profiles of the bones.

Another means of discriminating right or left leg of a pig leg part is also suitable, which includes; two pairs of measuring arms located in positions so that the measuring arms pinch the pig leg part at its thigh part from both sides of the thigh part, the leg part being hanging from a clamper with its ankle clamped with the clamper so that the fat layer side of the thigh part always faces toward a determined direction, measuring arm drive devices for driving the pairs of the measuring arms, each drive device drives each pair of the measuring arms to move each of the arms in direction opposite to each other so that distance between the measuring arms is varied and stops driving when the measuring arms pinch the thigh part, and a judging means which judges whether the leg part is a right leg part or left leg part by detecting the distance between arms of each pair of measuring arms and comparing small and large of the two distances detected.

Usually, a pig leg part is got rid of the hipbone. The pig leg part from which the hipbone is removed is different in thickness at its thigh part between the right leg and left leg. The discrimination means of the embodiment detect whether the pig leg part is a right thigh or left thigh utilizing this difference. With this construction of the discrimination means, two pair of measuring arms pinch the thigh part of the leg part from both sides, so discrimination whether it is a right leg or left leg can be detected exactly even when the hanged pig leg is swinging a little, because the swinging is stopped or restricted by pinching the thigh part with the measuring arms. Further, as the discrimination means can be composed only by providing the measuring arms, it is simple in construction and a complicated controlling is not needed.

Another means of detecting work length of a pig leg part is also suitable, which includes; a base bracket provided in the upstream side from a clamper, which transfers the pig leg part with its ankle clamped with the clamper such that the fat layer side thereof faces always toward a determined direction, to be capable of being advanced and moved up toward the pig leg from below, a detecting arm supported swingablly by the base bracket, the detecting arm being swung downward upon coming to contact with the femoral head of the pig leg part by lifting the base bracket, a detecting switch provided to the base bracket for detecting proximity or contact of the detecting arm to the switch when the detecting arm contacts the femoral head and is swung downward as the base bracket moves up, a pusher arm supported swingablly by the base bracket above the detecting arm so that the pusher arm which contact the lower part of the thigh of the pig leg first when the base bracket approaches the pig leg, thereby keeping a distance between the detecting arm and the thigh, the pusher arm swinging downward as the base bracket advances toward the thigh, and a work length computing means for calculating length of the pig leg part based on lifted distance of the base bracket when the switch detects that the detecting arm has come close to or contacted the femoral head.

With this construction of the work length detecting means, the detecting arm can be brought into contact with the femoral head of the pig leg without interfering with lower part of the thigh meat by providing the pusher arm. If the pusher arm is not provided, it may happen that the detecting arm interferes with meat part of the thigh when the base bracket approaches the thigh before the detecting arm comes to contact with the femoral head and the detecting arm can not contact the femoral head steadily. With the construction, when the base bracket is advanced and raised toward the pig leg, the pusher arm extending above the detecting arm toward the lower part of the thigh contact the lower part of the thigh and pushes away the thigh, so interference of the detecting arm with the lower part of the thigh does not occur. The pusher bar swings in the lower direction as the base part is advanced and raised due to reaction force the end of the pusher arm contacting the lower part of the thigh receives from the thigh, and the detecting arm can be brought into contact with the femoral head of the pig leg without interfering with the thigh. Thus, the detecting arm can be bought into contact with the femoral head without fail.

As has been described heretofore, with the cutter mechanism of the invention, incision making process conventionally performed manually can be automated, resulting in increased incision making operation and lightened labor of workers, by composing the cutter mechanism such that it comprises a cutter drive means for driving a cutter supporting arm on which the cutter is mounted to allow the cutter to make required incision, a swing mechanism attached to the cutter supporting arm to support the cutter swingablly about a swing shaft of the swing mechanism, the swing shaft being located at a position advanced toward travel direction of the cutter, a slide mechanism attached to the supporting arm for allowing the swing mechanism to slide in direction crossing the cutter travel direction, and a means for exerting elastic force to allow the swing mechanism to remain at a position when no force exerts on the swing mechanism in its sliding direction, whereby difference between a trajectory of movement of the cutter manipulated by the cutter drive means and actual surface profiles of the bones is compensated by the slide mechanism so that the cutter travels along the surfaces of the bones, and cutter is swung by means of the swing mechanism so that the cutting edge of the cutter is allowed to direct in the cutter travel direction. Further, automation level of overall de-boning operation is increased, and furthermore, accurate cutting operation by the cutter is performed for compensating difference in size and shape of individual bone laden meat, resulting in increased yield of meat.

According to the meat cutting apparatus of the invention, by composing the cutting apparatus such that it comprises a cutter mechanism composed as described above, a discrimination means for detecting what part of the slaughtered animal the bone laden meat is and/or its size, a plurality of cutting operation programs in each of which is defined beforehand a cutter movement trajectory in correspondence with the part and/or size of the bone laden meat, and a selecting means for selecting a program which corresponds with the part and/or size detected by the discrimination means from among the programs, whereby the cutter mechanism is driven under the selected program, a cutting operation program is selected by which the cutting movement trajectory of the cutter is the most appropriate for the size and shape of a bone laden meat to be de-boned. As a result compensation for difference in the size and shape between individual bone laden meat becomes easy and further accurate cutting operation can be performed.

### Brief Description of the Drawings

FIG.1 is an elevation view of an embodiment(first embodiment) of the cutter mechanism according to the present invention.
FIG.2 is a plan view of the cutter mechanism of FIG.1.
FIG.3 is a front view of the cutter mechanism of FIG.1.
FIG.4 is a drawing for explaining operation of the cutter mechanism of FIG.1.
FIGS.5a and 5b are elevation views of a discrimination means for detecting right or left of a pig leg part in a hanged state used in an embodiment (second embodiment) when the meat cutting apparatus of the invention is applied to removing bones of a pig leg.
FIG.6 is a representation showing cutting process in the second embodiment.
FIG.7 is a plan view of FIG.6.
FIG.8 is a control block diagram for controlling the cutter mechanism in the second embodiment.
FIGS.9a, 9b, and 9c are representations showing cutting positions in the second embodiment, FIG.9a is a longitudinal sectional view of a leg part of a slaughtered pig, FIG.9b is a section along line A-A in FIG.9a, and FIG.9c is a section along line B-B in FIG.9a.
FIG.10 an elevation view for explaining a discrimination device 110 for detecting right or left of a pig leg part in a hanged state used in the third embodiment.
FIG.11 is a section along line C-C in FIG.10.
FIG.12 is a drawing for explaining the driving device for driving the discrimination device 110 used in the third embodiment.
FIG. 13 is an elevation view of a work length detecting means 130 used in the fourth embodiment showing the state before the work length detecting means is engaged.
FIG.14 is an elevation view of the work length detecting means 130 showing the state the work length detecting means is on the way to engagement.
FIG.15 is an elevation view of the work length detecting means 130 showing the state the work length detecting means is completely engaged.
FIG.16 is a plan view of the work length detecting means 130.
FIG.17 is a plan view of a backside stabilizing mechanism 150 used in the fifth embodiment.
FIG.18 is a partial plan view of the backside stabilizing mechanism 150.
FIG.19 is a partial elevation view of the backside stabilizing mechanism 150.

### Best Mode for carrying out the Invention

Preferred embodiments of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

### [The first embodiment]

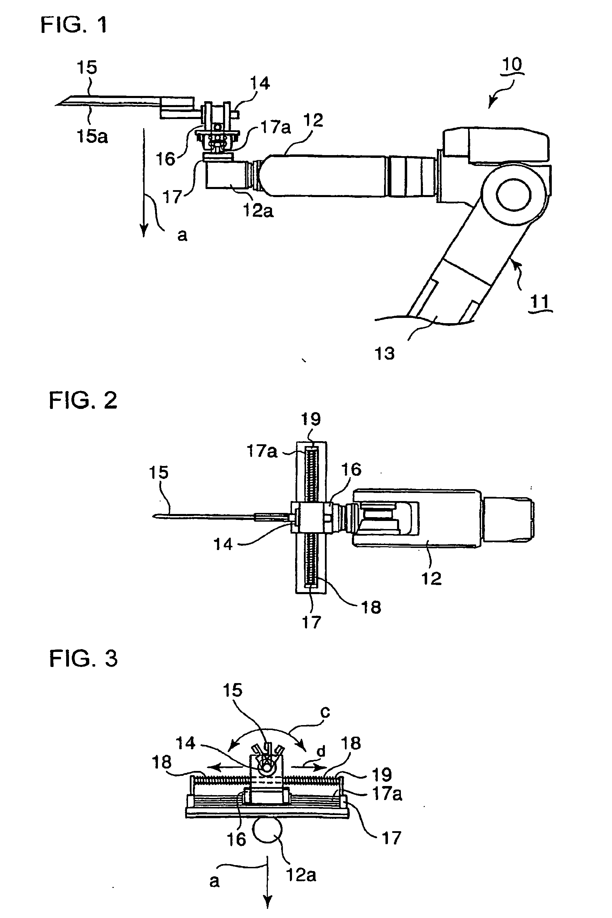

Referring to FIGS 1-3 showing the first embodiment, a cutter mechanism 10 of the embodiment is composed such that a cutter 15 is attached to a robot arm 12 of a 6-axis multi-joint robot 11, and the cutter 15 is operated by a cutter drive device 13 mounted to the body of the robot 11. The cutter 15 is fixed to a swing shaft 14 which is supported by a swing shaft supporter 16 swingably in directions C as shown in FIG.3. The cutting edge 15a of the cutter 15 is shaped to have a double-edged cutting edge so that incision along the bones can be made from both sides of the cutting edge of the cutter.

The cutter 15 can be moved by the robot 11 in travel direction 'a'. The cutter 15 is supported by the swing shaft 14 to which the cutter 15 is fixed such that the swing axis of the swing shaft 14 is positioned apart from the cutter 15 in the cutter travel direction 'a' by a certain distance.

At an end part 12a of the robot arm 12 is attached a base member 17 such that the longitudinal direction thereof is directed in perpendicular to the travel direction 'a' of the cutter 15. A linear guide rail 17a is provided on the base member 17 along the longitudinal direction thereof. The swing shaft supporter 16 is engaged with the linear guide rail 17a slidable in direction 'd'.

A linear guide bar 19 penetrates through the swing shaft supporter 16 so that the swing shaft supporter 16 is slid smoothly. Coil springs 18, 18 are provided to surround the linear guide bar 19 in both sides of the swing shaft supporter 16, the both springs push the swing shaft supporter 16 so that it is positioned at the lateral central part of the linear guide rail 17a.

In the first embodiment, a program for operating the cutter in accordance with the profile of the bone of the bone laden meat is memorized in the cutter drive device 13, and a trajectory of movement of the cutter 15 is determined by the program.

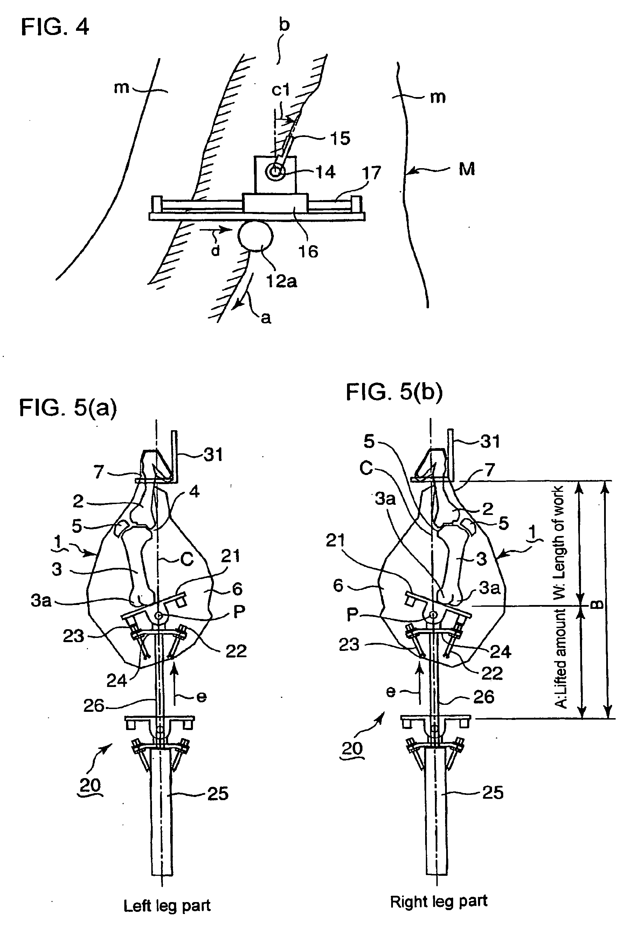

Operation of the cutter 15 will be explained referring to FIG. 4. A position of the cutter 15 when it contacts the surface of the bone 'b' of the bone laden meat M is set as an initial position of the cutter 15 in the cutting operation program, so the cutter 15 is inserted into the meat until it contacts the bone 'b' as shown in FIG.4.

When there is an error between the initial position of the bone set in the program and actual position of the bone due to difference in size of individual bone laden meat, the error is compensated by the sliding of the swing shaft supporter 16 in the right or left direction on the linear guide rail 17a pushed by reaction force from the bone.

When the end part 12a of the robot arm 12 moves from this position in the direction of arrow 'a' (cutter transfer direction) along the surface of the bone 'b' under the cutting operation program, the cutter 15 swings on the center axis of the swing arm 14 by an angle 'c1' so that the cutter 15 directs in the direction along the surface of the bone 'b'.

In this way, the cutter 15 swings on the center axis of the swing shaft 13 so that the cutter 15 directs in direction along the surface of the bone 'b', so the cutter 15 moves along the surface of the bone 'b' without biting into the bone 'b' nor departing from the surface of the bone 'b'. Therefore, not only cutting of meat around the circumference of the bone 'b' but also incision making to meat in longitudinal direction along the surface of the bone 'b' can be performed smoothly by the cutter.

According to the embodiment, first the cutter 15 is advanced to an initial position set in the cutting operation program memorized in the cutter drive device 13 so that the cutter takes a position along the surface of the bone 'b' in the meat 'M', an error caused by difference of the initial position set in the program from the actual position of the bone 'b' is compensated by allowing the cutter 15 to slide on the linear guide rail 17a, and the cutter 15 is rotated toward cutter travel direction 'a' by fixing the cutter 15 to the swing shaft 14 located at a position offset from the cutter toward the cutter travel direction 'a' so that the cutter is swingable on the central axis of the swing shaft 14, thereby the cutter 15 being directed in cutter travel direction 'a' along the surface of the bone 'b'.

Therefore, the cutter moves along the surface of the bone 'b' without biting into the bone 'b' and without departing from the surface of the bone 'b', so incision can be made smoothly along the surface of bone 'b' in longitudinal direction thereof. Accordingly, as the cutter 15 can advanced accurately along the boundary between the bone 'b' and meat 'm', the meat adhering to the bone 'b' can be disconnected with greater yields.

As a result, incision making along the surfaces of bones in longitudinal direction thereof, which was difficult to be automated and has been performed manually conventionally, can be performed automatically by the apparatus of the invention, and de-boning operation of bone laden meat is increased in efficiency, resulting in decreased operation time, and at the same time, the yield of meat is increased owing to accurate incision along the surfaces of bones.

### [The second embodiment]

Next, the second embodiment of the meat cutting apparatus applied to de-boning a leg part of a slaughtered pig will be explained with reference to FIGS.5 to 9. FIGS.5a and 5b are showing discriminating process for discriminating a right leg part from a left leg part (hereafter a leg part to be de-boned being referred to as a work) and at the same time for measuring length of the work. The work 1 consists of lower thighbones 2 including an ankle part 7, a thighbone (femur) 3, a knee cap 5 positioning at a front part near a hip joint part, and meat 6 surrounding these bones.

A hipbone (not shown in the drawings) is removed manually in a preprocessing operation.

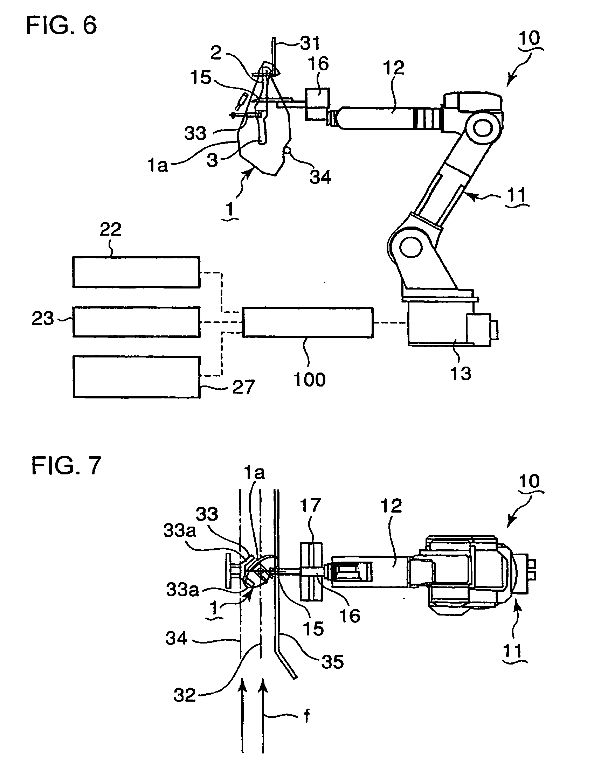

Then the ankle 7 of the work 1 is clamped manually by a clamper 31 without discriminating whether it is right leg part or left leg part as shown in FIGS. 5a, 5b, and 6. A plurality of clampers 31 are attached to a clamper transfer chain 32 (see FIG.7) at an equal spacing and transferred horizontally in direction of f shown in FIG.7 at a constant speed. The work 1 is de-boned automatically while it is transferred, the work 1 being hanged with its fat layer 1a directed backward (direction opposite to

the cutting mechanism installed side). In the discriminating process, discrimination of the work 1 transferred in a hanged attitude whether it is a right leg part or left leg part, is performed by a discrimination device 20 provided below the work 1. The discrimination device 20 discriminates the work 1 by utilizing the fact that, when the work 1 is hanged with its fat layer directed backward, the femoral head 3a of the left leg part comes leftward and that of the right lag part comes rightward in FIGS 5a and 5b.

The discrimination device 20 is composed of a lifter plate 24, a sensing plate 21 supported swingablly by the lifter plate 24, and an air cylinder 25 for moving up and down the lifter plate 24. The swing center P of the sensing plate 21 is on the vertical center line C of the work 1. The lifter plate is attached to a piston rod 26 of the air cylinder 25. A left proximity sensor 23 and a right proximity sensor 22 are attached to left end part and right end part of the lifter plate respectively.

With the construction, when the work 1 is transferred to above the discrimination device 20, the sensing plate 21 is lifted up by the air cylinder 25 from below the femoral head 3a in direction of arrow e. When the sensing plate 21 contact the femoral head 3a, the sensing plate 21 inclines such that the contacted side moves downward and comes close the proximity sensor 22 or 23. The proximity sensor 22 or 23 detects direction of inclination of the sensing plate 21. Discrimination of whether the work 1 is a left leg part or right leg part is done according to direction of inclination of the sensor plate 21.

At the same time with the discrimination operation, length of the work 1 is obtained by measuring lifted amount A of the sensing plate 21 when it has contacted the femoral head 3a, and subtracting the value A from a distance B which is the distance from the undersurface of the clamper 31 to the sensing plate 21 before it is lifted.

After the discrimination operation, meat around the ankle part 7 of the work 1 is cut all around the bone, then incision is made along the lower thighbones and thighbones in longitudinal direction thereof while the work 1 is in a hanged state. The incision making process will be explained with reference to FIGS.6 to 9a∼c.

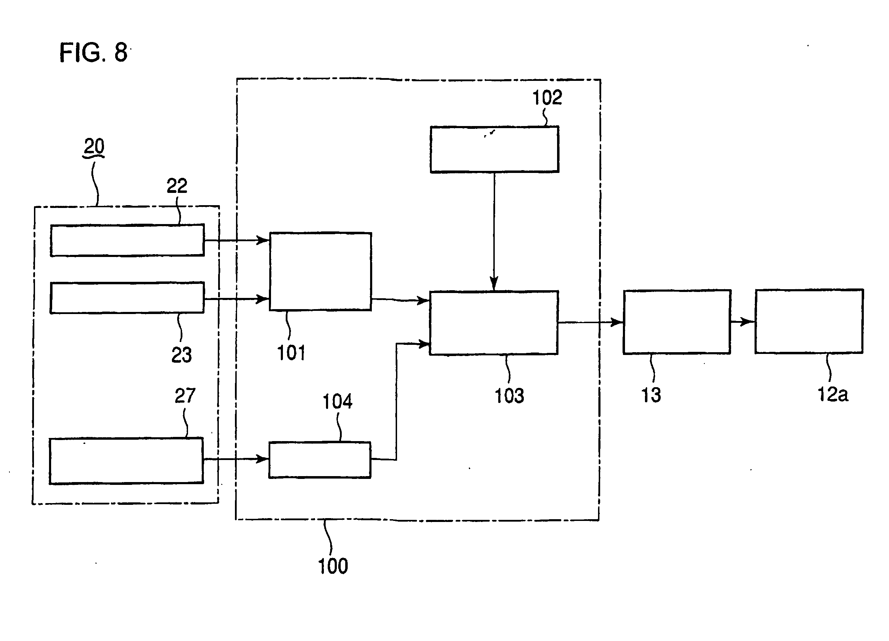

A cutter mechanism of the same construction as the cutter mechanism of FIGS.1 to 3 is used for the incision making operation. FIG.8 shows a control block diagram for controlling the cutter mechanism. In FIG.8, a plurality of cutting operation programs 102 for determining trajectory of movement of the cutter 15 are memorized in a controller 100.

As the cutting operation programs 102, six programs are provided to deal with right or left of the pig leg, and large, middle, small of the work length. Result of discrimination whether the work is a right leg part or left leg part detected by a discrimination means 101 and work length calculated in a computing means 104 based on the lifted amount of the sensing plate 21 detected by a detecting means 27, are inputted to a selecting means 103, and the selecting means 103 selects a program the most appropriate for the work 1 before incision is made to the work 1. The cutter drive device 13 drives the end part 12a of the robot arm 12 under the cutter operating program thus selected.

However, an error occurs inevitably due to difference in size of individual work 1 when the cutting operation is performed under the selected program, and this error can be compensated in the way explained in the first embodiment.

As shown in FIGS. 6 and 7, the work 1 transferred at a constant speed in direction f in a state hanging from the clamper is prevented from swinging by a stabilizing means. A plurality of clampers is attached to the transfer chain 32 at an equal spacing and transferred at a constant speed. A backside stabilizer 33 which pushes from the back side of the work 1 the fat layer 1a near the knee cap, and a guide bar 35 which pushes from the front side of the work 1 a part of the meat from where the hipbone has been removed in preprocessing, serve as the stabilizing means.

The guide bar 35 is fixedly located extending along the transfer chain 32 which forms transfer route of the work 1. The backside stabilizer 33 is attached to a chain 34 which moves parallel and at a speed the same to the transfer chain 32. The backside stabilizer 33 is formed such that it has crooked parts 33a at both sides thereof to form a concaved part facing toward the work 1. The backside stabilizer 33 has functions to support the surface of the fat layer 1a, to define a back side reference face, and to prevent swinging of the work 1.

In this way, the work 1 can be transferred stabilized without swinging in any direction by supporting at 3 points, i.e. at an upper part, middle part, and lower part thereof. Therefore, incision can be made to the work 1 at accurate positions. After incision is made, meat is scraped off from the lower thighbones 2 and the thighbone of the work 1.

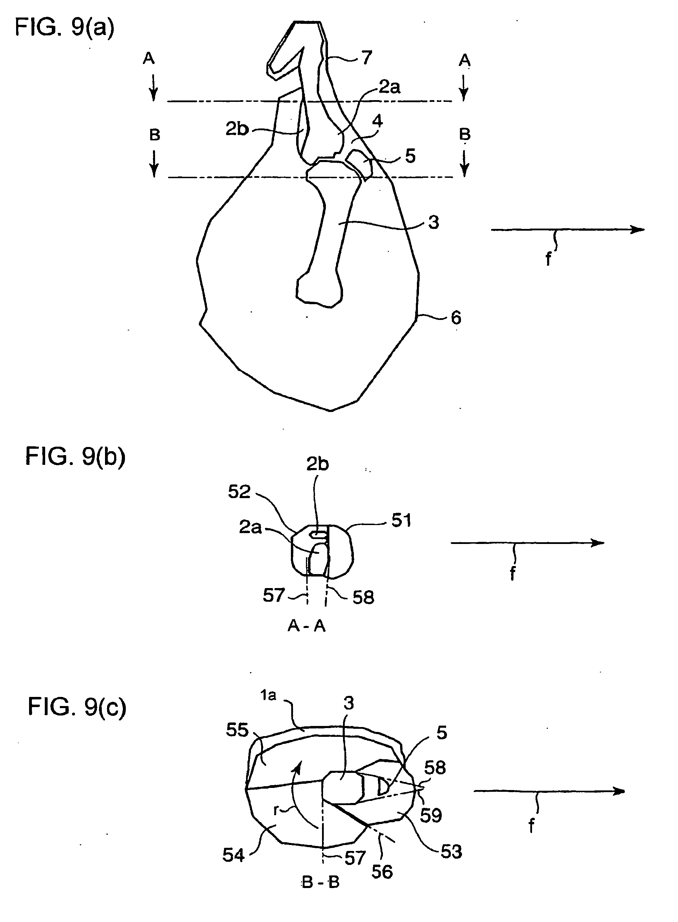

FIG.9a is a longitudinal sectional view of a leg part of a slaughtered pig, FIG. 9b is a section along line A-A in FIG. 9a, and FIG.9c is a section along line B-B in FIG.9a. Incision is made along 4 lines as shown in FIG.9c by incision lines 56 to 59. The lower thighbones 2 (consisting of a shinbone 2a and a fibula 2b) are surrounded with a meat part 51 (chimaki in Japanese) and shank meat 52. The thighbone 3 is surrounded with a meat part 53 (shintama in Japanese), inner thigh meat 54, and outer thigh meat 55. First, incision is made along the incision line 56 by inserting the cutter from the upper part of the knee joint part 4, then, when the cutter end reaches the surface of the thighbone 3, the cutter end is advanced along the surface of the thighbone and the middle part of the cutter advances along the membrane between the inner thigh meat 54 and the meat part of shintama 53 to cut till the end of the thighbone 3.

The incision line 57 shows an incision from the upper part of the lower thighbones 2 to the lower end of the knee joint part 4. The incision line 58 show an incision made by inserting the cutter into the meat part of chimaki 51 from the upper part of the lower thighbones 2, and the end of the cutter reaches the lower end part of the knee joint part passing by the side face of the knee cap 5. The incision line 59 shows an incision made by a round cutter passing by the side face of the knee cap. By the way, the incision line 58 in FIG.9c is rotated by about 90° relative to the incision line 58 in FIG.9b. This is because the lower thighbones 2 are twisted relative to the thigh bone 3 and the incision line 58 runs along the bone, so the incision line 58 becomes a twisted line.

By making incision like this along the incision lines 57, 57 from the upper part of the lower thighbones 2 to the lower end part of the knee joint part along the surfaces of the lower thighbones 2, and along the incision line 56 from the upper part of the lower thighbones 2 through the knee joint part to cut along the membrane between the meat part of shintama 53 and inner thigh meat 54, meat scraping off from the lower thighbones 2 and thighbone 3 can be eased.

According to the second embodiment, a cutting operation program is selected in accordance with the pig leg part to be de-boned from a plurality programs prepared to deal with right or left of the leg part, and large, middle, small of the work length, incision is made to the pig leg part according to the selected program, and an error between the initial position of the bone set in the selected program and actual position of the bone due to difference in size of individual pig leg part to be de-boned is compensated by swing and slide actions of the cutter of the cutter mechanism 10, so incision making operation along the surfaces of the bones in longitudinal direction thereof which has been performed manually in the past can be automated by the use of a multi-axis multi-joint joint robot. As a result, operation efficiency is increased resulting in decreased processing time, and accurate incision can be made along the surfaces of the bones resulting in improved meat yields.

### [The third embodiment]

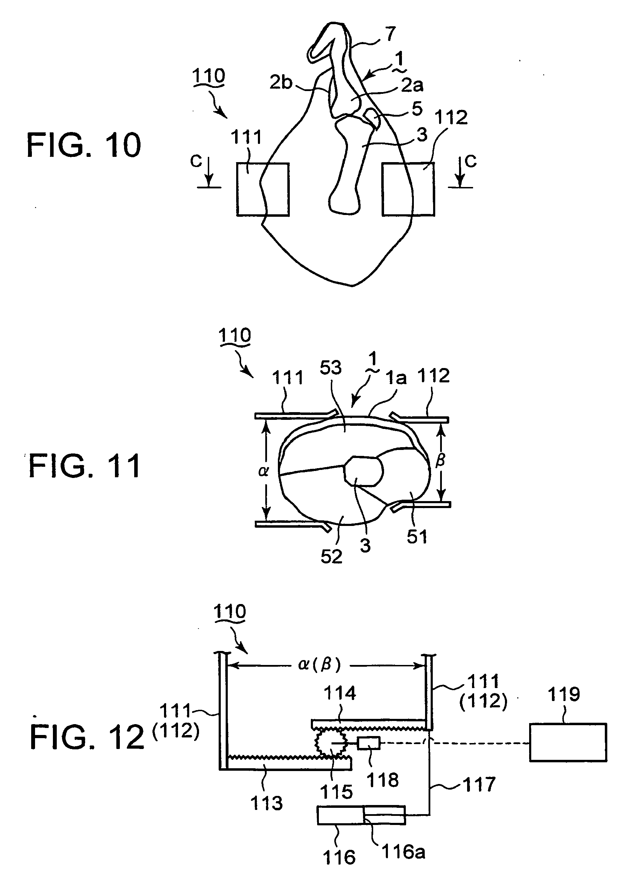

Next, another discrimination means for detecting right or left of pig leg part in a hanged state will be explained with reference to FIGS.10 to 12 as the third embodiment. FIG.10 shows an elevation view for explaining a discrimination device 110 for detecting right or left of pig leg part in a hanged state used in the third embodiment, FIG.11 is a section along line C-C in FIG.10, and FIG.12 is a drawing for explaining the driving device of the discrimination device 110 used in the third embodiment.

Referring to FIGS.10 and 11, a pair of measuring arms 111 and 112 approaches a pig leg part 1 with hip bone removed (work 1) from either side of the work 1 to pinch the work 1. The pair of measuring arms 111 and 112 stops when they have pinched the work 1. Mechanism for driving the measuring arms will be explained referring to FIG.12. In FIG.12, the pair of measuring arms 111(112) has a rack 113(114) extending horizontally (perpendicular to the pair of arms 111(112)) fixed to the arms. Each of the racks 113, 114 engages with a pinion 115 located between the racks.

A piston rod 117 connected to a piston 116a of an air cylinder 116 is connected to one of the measuring arms of the pair of measuring arms 111(112). Distance α (or β) between the arms of the pair of arms 111(112) can be adjusted by actuating the air cylinder 116. An encoder 118 is connected to the pinion 115. The distance α (or β) is detected by detecting rotation angles or by counting the number of rotation of the encoder 118 by means of a judging means 119 for judging right or left of a leg part. As the air cylinder is actuated by air which is compressible fluid, the pair of measuring arms 111(112) stops automatically when it clamps the work 1 and receives reaction force of certain largeness from the work 1.

Then, measured distance α and β are compared. For example, it is judged that, when α > β, the work 1 is a right leg part, and when α < β, the work 1 is a left leg part. The measurement is carried out by pinching the work 1 with two pairs of measuring arms when the work 1 transferred intermittently to a position in front of the discrimination device 110 is stopped there.

Discrimination of a right thigh from a left thigh can be done accurately with the discrimination device of simple construction.

### [The fourth embodiment]

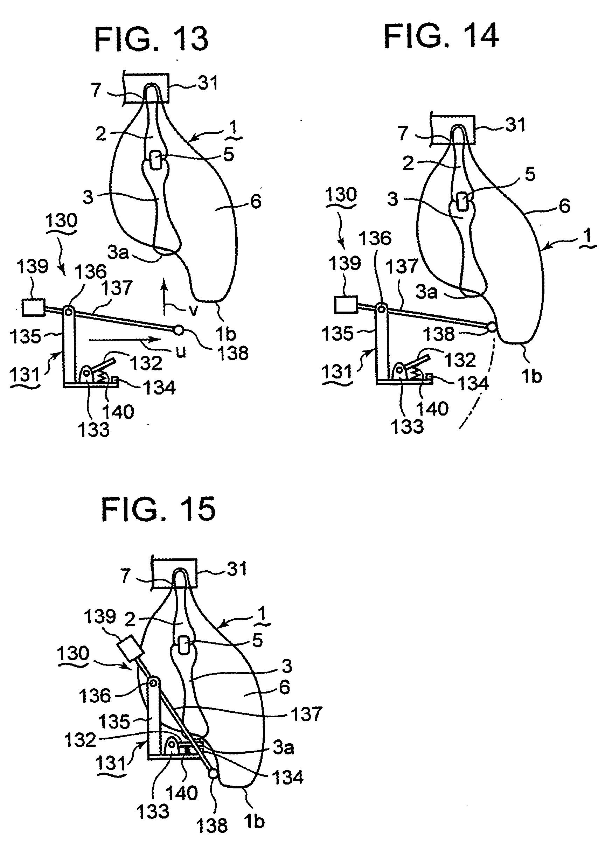

Next, another work length detecting means will be explained with reference to FIGS.13 to 16 as the fourth embodiment. Referring to FIGS. 13 to 16, reference numeral 130 is a work length detecting means. A detecting arm 132 is supported swingablly at an end thereof by a bracket fixed to a base bracket 131. A limit switch or proximity switch 134 (hereafter referred to as a switch 134) is fixed to a horizontal plate of the base bracket 131 below the other end of the detecting arm 132. Lifted distance of the base bracket 131 when the switch 134 has detected that the other end of the detecting arm 132 has come close to or contacted the switch 134, can be detected.

A support shaft 136 is provided to an upper end part of a support pillar 135 of the base bracket 131, and a pusher arm 137 is supported swingablly via the support shaft 136. To the pusher arm 137 is attached a round bar 138 at an end thereof and a counter weight 139 at the other end. A spring 140 is provided on the horizontal plate of the base bracket 131 under the detecting arm 132 to push the detecting arm 132 upward so that the end of the detecting arm 132 is kept apart from the switch 134 unless force exerts to push down the detecting arm 132. The round bar 138 attached to the pusher bar 137 is a long bar, so the pusher bar 137 can be rotated in clockwise direction smoothly without the round bar 138 being interrupted by the work 1.

As the work 1 is got rid of the hipbone 4, the lower part thereof is scooped out deeply and femoral head 3a is exposed. The femoral head 3a is not so apart from the lower end part 1b of the work 1, so when the detecting arm 132 comes near to the work 1, the end of the detecting arm 132 may interfere with the lower end part 1b of the work 1. With the work length detecting means 130 composed as mentioned above, first the base bracket 131 is advanced in direction of arrow u into position, then lifted up in direction of arrow v. As shown in FIG.14, when the base bracket 131 is advanced and lifted, the round bar 138 attached to the pusher arm 137 comes to contact with the lower end part of the work 1, pushes away the work 1, so the detecting arm 132 does not come to contact with the lower end part of the work 1. The pusher arm 137 swings downward by reaction force that the round bar 138 receives from the work 1. Then the base bracket 131 is lifted as shown in FIG. 15. When the detecting arm 132 comes to contact with the femoral head 3a and is pushed down by the femoral head 3a, the detecting arm 132 swings downward and its end part comes close to or contact the switch 134. This is detected by the switch 134, and lifted distance of the base bracket 131 is detected, and work length W is calculated in the same way as the second embodiment shown in FIGS.5a, 5b.

With the work length detecting means 130, the detecting arm 132 comes to contact with the femoral head 3a of the pig thigh 1 after the pusher arm 137 comes to contact with the lower end part 1b of the pig thigh 1 and pushes it away, so the detecting arm 132 can come to contact with the femoral head 3a without interfered by the thigh meat. Therefore, work length W can be measured accurately.

When measuring work length while transferring the work, it is possible to compose such that the work length detecting means 130 is transferred at the same speed as the work transfer speed during the measurement. When the measurement is finished, the work length detecting means 130 is returned to the initial position.

### [The fifth embodiment]

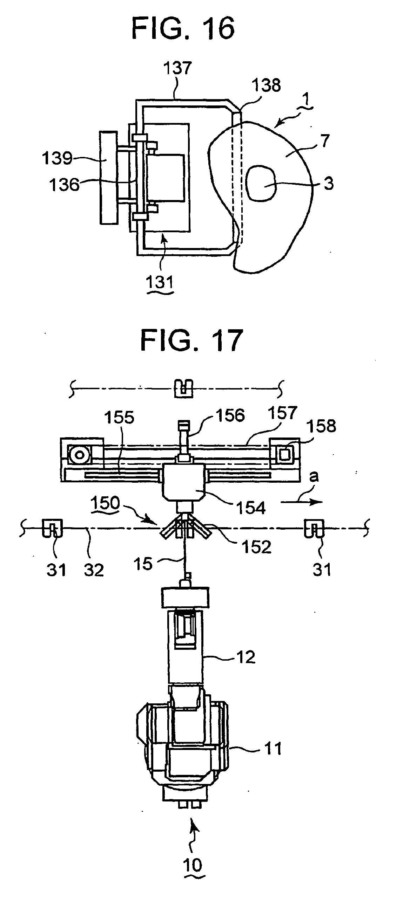

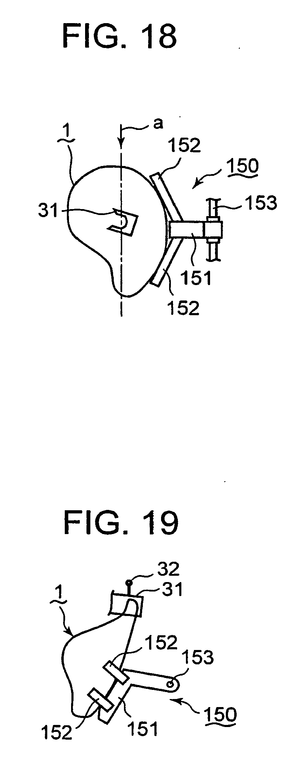

Another stabilizing mechanism for supporting the work 1 when making incision, which is different from the support means shown in FIGS.6 and 7, will be explained with reference to FIGS.17 to 19. The stabilizing mechanism of the embodiment adopts a backside supporting mechanism 150 to support the work 1 from the backside (fat layer 1a side) of the work 1. As shown in FIGS.18 and 19, the backside supporting mechanism 150 is composed of a base support member 151 which is disposed to face the backside of the work and slanting from vertical direction, pairs of arms 152 of which the arms of each pair extend from the base support member 151 toward both sides and slanted forwardly so that the support arms 152 can contact the backside surface of the work 1, and a support shaft 153 for supporting the base support member 151. The work 1 is supported by the supporting mechanism in a state it is slanted forwardly, that is, the work hanging from the clamping device is slanted pushed forward by the arms 152 as shown in FIG.19. Therefore, a part of the weight of the work 1 is supported by the supporting mechanism, and the work 1 is not swung by the force applied by the cutter manipulated by the robot 10 when incision is made to the work, that is, the work 1 is stabilized against the cutting force of the cutter. Further, incision making is facilitated by slanting the work 1.

In the embodiment, the guide bar 35 provided in the front side of the work 1 in the case of the second embodiment shown in FIGS.6 and 7 is not provided. As the work 1 is supported in an attitude slanted forwardly as shown in FIG.19, the work 1 can be stabilized when making incision to the work 1 without the guide bar 35. As the guide bar 35 is not provided, it is possible to accommodate the work 1 with various lengths.

Mechanism of driving the backside supporting mechanism 150 will be explained referring to FIG. 17. The base support member 151 of the backside stabilizing mechanism 150 is attached to a block 154 via the support shaft 153. The block 154 is engaged with a timing belt 157 and can be moved in the transfer direction 'a' in synchronism with the transfer of the clamper 31 by driving (rotating) the endless belt 157 by means of a servo motor 158.

The block 154 is also engaged with a linear guide155 slidably so that the block can be moved smoothly without rattled by the force acting from the robot arm. When making incision, the supporting mechanism 150 is moved in the transfer direction 'a' at a speed the same as the clamper 31 in synchronism with the clamper 31 and supports the work 1 on the backside thereof. When incision is finished, the backside stabilizing mechanism 150 is departed backward from the transfer route 32 by actuating an air cylinder 156 attached to the block 154. Then the block 154 is moved in the direction opposite to the transfer direction 'a' to be returned to the initial position. The block 154 is again advanced to the transfer route 32 of the clamper 31 and support the next work 1 from the backside thereof. When a plurality of robot arms are provided in an incision making section to perform a plurality of incision making operation, a plurality of backside stabilizing mechanisms 150 are provided separately for the plurality of robot arms.

With the backside stabilizing mechanism 150 of this construction, control of transfer speed of the mechanism 150 is possible by the servo motor 158, so the mechanism 150 can accommodate an arbitrary transfer speed of the work. Further, installation space is reduced as compared with the backside stabilizer 33 transferred by the chain 34 as shown in FIG.7. Furthermore, when the backside stabilizing mechanism 150 is returned to the initial position, it can be returned at a speed of 2 or 3 times the transfer speed of the work, so it can accommodate speeding up of work transfer.

### Industrial Applicability

According to the invention, incision making operation of a bone laden meat of a slaughtered domestic animal, particularly cutting along the surface of the bones in longitudinal direction thereof, can be automated, and increased efficiency and labor-saving de-boning operation is made possible.

## Claims

1. A meat cutting apparatus comprising a cutter mechanism (10) for making incision along surfaces of bones of a bone laden meat of a slaughtered domestic animal, the cutter mechanism comprising:
a cutter (15) for making incision,
a cutter drive means for driving a robot arm (12) of a multi-joint, multi-axis robot (11) on which the cutter is mounted to allow the cutter to make required incision, **characterized by**;
a slide mechanism (13) attached to the robot arm, the slide mechanism extending in direction crossing travel direction of the cutter and comprising a linear guide extending perpendicular to the robot arm and crossing the travel direction of the cutter,
a swing mechanism (14) mounted on the linear guide of the slide mechanism for supporting the cutter swingablly about a swing shaft provided to the swing mechanism in a plane perpendicular to the extending direction of the slide mechanism and the linear guide, the swing shaft being located at a position advanced toward travel direction of the cutter, and
a means (18) for exerting elastic force to allow the swing mechanism to remain at a position on the linear guide when no force exerts on the swing mechanism in its sliding direction being the extending direction of the linear guide,
whereby difference between a trajectory of movement of the cutter defined by the cutter drive means and actual surface profiles of the bones is compensated by the slide mechanism so that the cutter travels along the surfaces of the bones, and cutter is swung by means of the swing mechanism so that the cutting edge of the cutter is allowed to direct in the cutter travel direction,
wherein the meat cutting apparatus comprises a discrimination means for detecting what part of the slaughtered animal the bone laden meat is and its size, a plurality of cutting operation programs in each of which is defined beforehand a cutter movement trajectory in correspondence with the part and size of the bone laden meat, and a selecting means for selecting a program which corresponds with the part and size detected by the discrimination means from the programs, whereby the cutter mechanism is driven under the selected program.

2. A meat cutting apparatus as claimed in claim 1,
wherein said bone laden meat is a pig leg part, and
wherein said discrimination means comprises;
a discrimination device which has a plate supported swingablly and capable of being moved upward from below the pig leg part hanged from a clamper with its ankle clamped with the clamper so that the fat layer side of the thigh part always faces toward a determined direction, whereby the discrimination device detect swung direction of the plate when the plate is moved upward with the center of swing of the plate running along the vertical center line of the thigh part hanging from the clamper and swing upon contacting the femoral head of the thigh part and discriminate whether the thigh part is a right thigh part or left thigh part based on the detected swung direction, and
a work length detecting means for calculating length of the pig leg part based on lifted distance of the plate until the plate comes to contact with the femoral head.

3. A meat cutting apparatus as claimed in claim 1,
wherein said bone laden meat is a pig leg part, and
wherein said discrimination means comprises
two pairs of measuring arms located in positions so that the measuring arms pinch the pig leg part at its thigh part, the leg part being hanged from a clamper with its ankle clamped with the clamper so that the fat layer side of the thigh part always faces toward a determined direction, from both sides of the thigh part,
measuring arm drive devices for driving the pairs of the measuring arms, each drive device drives each pair of the measuring arms to move each of the arms in direction opposite to each other so that distance between the measuring arms is varied and stops driving when the measuring arms pinch the thigh part, and
a judging means which judges whether the leg part is a right leg part or left leg part by detecting the distance between arms of each pair of measuring arms and comparing small and large of the two distances detected.

4. A meat cutting apparatus as claimed in claim 1,
wherein said bone laden meat is a pig leg part, and
wherein said discrimination means comprises
a base bracket provided in the upstream side from a clamper, which transfers the pig leg part with its ankle clamped with the clamper such that the fat layer side thereof faces always toward a determined direction, to be capable of being advanced and moved up toward the pig leg from below,
a detecting arm supported swingablly by the base bracket, the detecting arm being swung downward upon coming to contact with the femoral head of the pig leg part by lifting the base bracket,
a detecting switch provided to the base bracket for detecting proximity or contact of the detecting arm to the switch when the detecting arm contacts the femoral head and is swung downward as the base bracket moves up,
a pusher arm supported swingablly by the base bracket above the detecting arm so that the pusher arm which contacts the lower part of the thigh of the pig leg first when the base bracket approaches the pig leg, thereby keeping a distance between the detecting arm and lower part of the thigh, the pusher arm swinging downward as the base bracket advances toward the pig leg part, and
a work length computing means for calculating length of the pig leg part based on lifted distance of the base bracket when the switch detects that the detecting arm has come close to or contacted the femoral head.

5. A meat cutting apparatus as claimed in any one of claims 1 to 4, wherein said slide mechanism has a linear guide extending perpendicular to the robot arm and crossing the travel direction of the cutter, said swing mechanism being mounted on the linear guide, and said elastic force exerting means consists of springs provided in both sides of said swing mechanism having said swing shaft to allow the swing mechanism to remain at a position when no force exerts on the swing mechanism in its sliding direction.

6. A meat cutting apparatus as claimed in any one of claims 1 to 5, wherein said cutter is of a double-edged cutter.

## Patentansprüche

1. Fleischschneidevorrichtung mit einer Schneidevorrichtung (10) zur Durchführung von Schnitten entlang Knochenoberflächen von mit Knochen durchzogenem Fleisch eines geschlachteten Haustieres, die Schneidevorrichtung umfassend:
ein Schneidewerkzeug (15) zur Durchführung von Schnitten,
eine Schneideantriebsvorrichtung zum Antrieb eines Roboterarms (12) eines Mehrgelenk-Mehrachsroboters (11), an welchem das Schneidewerkzeug so angebracht ist, dass das Schneidewerkzeug die notwendigen Schnitte durchführen kann, **gekennzeichnet durch**
eine Gleitvorrichtung (13), die an dem Roboterarm angebracht ist, wobei die Gleitvorrichtung sich quer zur Laufrichtung des Schneidewerkzeugs erstreckt und eine Linearführung umfasst, die sich senkrecht zu dem Roboterarm und quer zur Laufrichtung des Schneidewerkzeugs erstreckt,
eine Schwenkvorrichtung (14), die an der Linearführung der Gleitvorrichtung so angebracht ist, dass das Schneidewerkzeug schwenkbar um eine Schwenkwelle, die an der Schwenkvorrichtung angeordnet ist, in einer Ebene, die senkrecht zur Erstreckungsrichtung der Gleitvorrichtung und der Linearführung ist, gelagert ist, wobei die Schwenkwelle sich in einer Position befindet, die in Richtung der Laufrichtung des Schneidewerkzeugs vorgeschoben ist,
eine Vorrichtung (18) zur Ausübung einer elastischen Kraft, so dass der Schwenkmechanismus in einer Position an der Linearführung bleiben kann, wenn keine Kraft an der Schwenkvorrichtung in Schieberichtung, welche die Erstreckungsrichtung der Linearführung ist, ausgeübt wird,
wobei der Unterschied zwischen einer Bewegungsbahn des Schneidewerkzeugs, welche von der Schneideantriebsvorrichtung bestimmt wird, und den tatsächlichen Oberflächenprofilen der Knochen so **durch** die Schiebevorrichtung ausgeglichen wird, dass sich das Schneidewerkzeug entlang der Knochenoberfläche bewegt und das Schneidewerkzeug mittels der Schwenkvorrichtung so geschwenkt wird, dass die Schneidkante des Schneidewerkzeugs in Laufrichtung des Schneidewerkzeugs zeigt,
wobei die Fleischschneidevorrichtung umfasst: eine Unterscheidungseinrichtung zur Ermittelung, welches Teilstück des geschlachteten Haustiers das von Knochen durchzogene Fleisch ist, und zur Ermittelung seiner Größe, eine Vielzahl von Programmen zum Ablauf des Schneidevorgangs, in denen jeweils im Voraus eine Schneidebewegungsbahn, die mit dem Teilstück und der Größe des von Knochen durchzogenen Fleischs korrespondiert, definiert ist, und eine Auswahleinrichtung zur Auswahl eines Programms, das mit dem Teilstück und der Größe, die von der Unterscheidungsvorrichtung erkannt worden sind, korrespondiert, wobei die Schneidevorrichtung mit dem ausgewählten Programm betrieben wird.

2. Fleischschneidevorrichtung nach Anspruch 1,
wobei das von Knochen durchzogene Fleisch ein Schweinebeinteil ist, und
wobei die Unterscheidungseinrichtung umfasst:
ein Unterscheidungsgerät, welches eine schwenkbar gelagerte Platte hat und von unten nach oben in Richtung des Schweinebeins, welches von einer Klemmbefestigung hängt und dessen Gelenk in der Klemmbefestigung so befestigt ist, dass die Seite des Oberschenkelteils, an dem sich die Fettschicht befindet, immer in eine bestimmte Richtung zeigt, bewegt werden kann, wobei das Unterscheidungsgerät die Schwingrichtung der Platte, wenn diese nach oben bewegt wird und der Schwenkmittelpunkt der Platte entlang der vertikalen Mittellinie des Oberschenkelteils verläuft, das von der Klemmbefestigung hängt, erkennt und schwingt, sobald es den Hüftkopf des Beinteils berührt,
und basierend auf der ermittelten Schwingrichtung entscheidet, ob der Oberschenkelteil ein rechter Oberschenkelteil oder ein linker Oberschenkelteil ist, und
eine Arbeitslängenerfassungseinrichtung zur Berechnung der Länge des Schweinebeiriteils basierend auf der Wegstrecke, die die Platte zurücklegt, bis sie den Hüftkopf berührt.

3. Fleischschneidevorrichtung nach Anspruch 1,
wobei genanntes von Knochen durchzogenes Fleisch ein Schweinebeinteil ist, und
wobei genannte Unterscheidungsvorrichtung umfasst:
zwei Messarmpaare, die an Stellen angebracht sind, so dass die Messarme das Schweinebeinteil, welches von einer Klemmbefestigung hängt und dessen Gelenk in der Klemmbefestigung so befestigt ist, dass die Seite des Oberschenkelteils, an dem sich die Fettschichtseite befindet, immer in eine bestimmte Richtung zeigt, am Oberschenkelteil von beiden Seiten des Oberschenkelteils einklemmen,
Antriebsgeräte für den Messarm zum Antrieb der Messarmpaare, wobei jedes Antriebsgerät jeweils ein Paar von Messarmen antreibt, um jeden der Messarme in jeweils entgegengesetzter Richtung zu bewegen, damit der Abstand zwischen den Messarmen variiert wird und die Bewegung stoppt, wenn die Messarme den Oberschenkelteil einklemmen, und
eine Beurteilungseinrichtung zur Beurteilung, ob das Beinteil ein rechtes Beinteil oder ein linkes Beinteil ist, indem die Entfernung zwischen den Armen jedes Messarmpaares erfasst wird und die größere und kleinere der beiden erfassten Entfernungen verglichen werden.

4. Fleischschneidevorrichtung nach Anspruch 1,
wobei das von Knochen durchzogene Fleisch ein Schweinebeinteil ist, und
wobei die Unterscheidungseinrichtung umfasst:
ein Stützteil, das stromaufseitig von einer Klemmbefestigung angeordnet ist, die das Schweinebeinteil, dessen Gelenk an der Klemmbefestigung befestigt ist, so bewegt,
dass die Fettschichtseite des Schweinebeinteils immer in eine bestimmte Richtung zeigt,
um vorgeschoben und von unten nach oben in Richtung des Schweinebeins bewegt werden zu können,
einen Detektionsarm, der von dem Stützteil schwenkbar gelagert ist und der, wenn er den Hüftkopf des Schweinebeinteils berührt, nach unten geschwungen wird, indem das Stützteil angehoben wird,
einen Detektionsschalter an dem Stützteil, um die Nähe des Detektionsarms zu oder den Kontakt des Detektionsarms mit dem Schalter zu bestimmen, wenn der Detektionsarm den Hüftkopf berührt und nach unten schwingt, wenn sich das Stützteil nach oben bewegt,
einen Drückerarm, der oberhalb des Detektionsarms vom Stützteil schwenkbar gelagert ist, so dass der Drückerarm als erster den unteren Teil des Oberschenkels des Schweinebeins berührt, wenn das Stützteil sich dem Schweinebein nähert, wodurch ein Abstand zwischen dem Detektionsarm und dem unteren Teil des Oberschenkels gehalten wird, wobei der Drückerarm nach unten schwingt, wenn sich das Stützteil in Richtung des Schweinebeinteiles bewegt, und
eine Vorrichtung zur Berechnung der Arbeitslänge, um die Länge des Schweinebeinteils basierend auf der Wegstrecke zu berechnen, die das Stützteil zurückgelegt hat, wenn der Schalter erkennt, dass der Detektionsarm dem Hüftkopf nahe ist oder diesen berührt hat.

5. Schneidevorrichtung nach einem der Ansprüche 1 bis 4, wobei die Gleitvorrichtung eine Linearführung besitzt, die sich senkrecht zum Roboterarm und quer zur Laufrichtung des Schneidwerkzeugs erstreckt, wobei die Schwenkvorrichtung auf der Linearführung angebracht ist, und wobei die Vorrichtung zur Ausübung einer elastischen Kraft aus Federn besteht, die an beiden Seiten der Schwenkvorrichtung, welche die Schwenkwelle aufweist, so angebracht sind, dass die Schwenkvorrichtung in einer Stellung bleiben kann, wenn keine Kraft auf die Schwenkvorrichtung in deren Gleitrichtung ausgeübt wird.

6. Fleischschneidevorrichtung nach einem der Ansprüche 1 bis 5, wobei das Schneidwerkzeug ein zweischneidiges Schneidwerkzeug ist.

## Revendications

1. Un appareil de découpe de viande comprenant un mécanisme de découpe (10) pour faire une incision le long des surfaces d'os d'une viande chargée sur os d'un animal domestique sacrifié, le mécanisme de découpe comprenant:
- un couteau (15) pour faire l'incision,
- un moyen d'actionnement de couteau pour actionner un bras robotique (12) d'un robot (11) multiaxes à articulations multiples sur lequel le couteau est monté pour permettre au couteau de faire l'incision exigée, **caractérisé par**:
- un mécanisme de glissement (13) attaché au bras robotique, le mécanisme de glissement s'étendant dans la direction croisant la direction de déplacement du couteau et comprenant un guide linéaire s'étendant perpendiculairement au bras robotique et croisant la direction de déplacement du couteau,
- un mécanisme d'oscillation (14) monté sur le guide linéaire du mécanisme de glissement pour soutenir le couteau capable d'osciller sur un arbre d'oscillation pourvu au mécanisme d'oscillation dans un plan perpendiculaire à la direction d'extension du mécanisme de glissement et du guide linéaire, l'arbre d'oscillation étant logé à une position avancée vers la direction de déplacement du couteau, et
- un mécanisme (18) pour exercer une force élastique pour permettre au mécanisme d'oscillation de rester à une position sur le guide linéaire quand aucune force ne s'exerce sur le mécanisme d'oscillation dans sa direction de glissement étant la direction d'extension du guide linéaire,
- par lequel la différence entre une trajectoire de mouvement du couteau définie par le moyen d'actionnement du couteau et les profils de surface actuels des os est compensée par le mécanisme de glissement de sorte que le couteau soit déplacé le long des surfaces des os, et le couteau soit oscillé par le moyen du mécanisme d'oscillation de sorte qu'au bord de découpe du couteau soit permis d'être dirigé dans le sens de déplacement du couteau,
dans lequel l'appareil de découpe de viande comprend un moyen de discrimination pour détecter à laquelle partie de l'animal sacrifié la viande chargée sur os est et sa dimension, une pluralité de programmes d'opérations de découpe dans lesquels est définie en préalable une trajectoire de déplacement du couteau en correspondance avec la partie et la dimension de la viande chargée sur os, et un moyen de sélection pour sélecter un programme qui correspond avec la partie et la dimension détectée par le moyen de discrimination d'entre les programmes, par lequel le mécanisme de découpe est actionné par le programme sélecté.

2. Un appareil de découpe de viande selon la revendication 1, où ladite viande chargée sur os est une partie de jambe de porc, et où ledit moyen de discrimination comprend:
un dispositif de discrimination qui présenté une plaque soutenue de manière oscillante et capable d'être déplacée vers le haut depuis le dessous de la partie de jambe de porc pendue d'un crochet avec sa cheville fixée au crochet de sorte que le côté de couche de graisse de la partie de cuisse soit orienté toujours vers une direction déterminée, dans lequel le dispositif de discrimination détecte la direction d'oscillation de la plaque quand la plaque est déplacée vers le haut avec le centre d'oscillation de la plaque passant le long de la ligne centrale verticale de la partie de cuisse pendue dans le crochet et oscillant au contact de la tête fémorale de la partie de cuisse et fait discriminer si la partie de cuisse est une partie droite de cuisse ou partie gauche de cuisse basé sur la direction d'oscillation détectée, et
un moyen pour détecter la longueur de travail pour calculer la longueur de la partie de jambe de porc basée sur la distance de levage de la plaque jusque la plaque vient en contact avec la tête fémorale.

3. Un appareil de découpe de viande selon la revendication 1, où ladite viande chargée sur os est une partie de jambe de porc, et où ledit moyen de discrimination comprend:
deux paires de bras de mesure logés en positions de sorte que les bras de mesure pincent la partie de jambe de porc à sa partie de cuisse, la partie de jambe étant pendue d'un crochet avec sa cheville fixée au crochet de sorte que le côté de couche de graisse de la partie de cuisse soit orienté toujours vers une direction déterminée, à partir de tous les deux côtés de la partie de cuisse,
des dispositifs d'actionnement des bras de mesure pour actionner les paires de bras de mesure, chaque dispositif d'actionnement actionne chaque paire des bras de mesure pour mouvoir chacun des bras dans un sens opposé l'un de l'autre de sorte que la distance entre les bras de mesure soit variée et arrête l'actionnement quand les bras de mesure pincent la partie de cuisse, et
des moyens de jugement qui jugent si la partie de jambe est une partie droite de jambe ou une partie gauche de jambe par la détection de la distance entre les bras de chaque paire de bras de mesure et en comparant la petite et la large d'entre les deux distances détectées.

4. Un appareil de découpe de viande selon la revendication 1, où ladite viande chargée sur os est une partie de jambe de porc, et où ledit moyen de discrimination comprend:
un support de base pourvu dans le côté en amont d'un crochet qui transfère la partie de jambe de porc avec sa cheville fixée avec le crochet de sorte que le côté de couche de graisse de celle-ci soit orienté toujours vers une direction déterminée, pour être capable d'être avancé et mu vers la jambe de porc de dessous,
un bras de détection soutenu à possibilité d'oscillation par le support de base, le bras de détection étant oscillé vers le bas après le contact avec la tête fémorale de la partie de jambe de porc en levant le support de base,
un commutateur de détection pourvu au support de base pour détecter la proximité ou le contact du bras de détection au commutateur quand le bras de détection contacte la tête fémorale et est oscillé vers le bas quand le support de base se meut vers le haut,
un bras pousseur soutenu à possibilité d'oscillation par le support de base au dessus du bras de détection de sorte que le bras pousseur contacte d'abord la partie inférieure de la cuisse de la jambe de porc quand le support de base s'approche de la jambe de porc, de cette manière en maintenant une distance entre le bras de détection et la partie inférieure de la cuisse, le bras pousseur oscillant vers le bas quand le support de base avance vers la partie de jambe de porc, et
un moyen de calcul de la longueur de travail pour calculer la longueur de la partie de jambe de porc basée sur la distance de levage du support de base quand le commutateur détecte que le bras de détection est arrivé près de ou en contact avec la tête fémorale.

5. Un mécanisme de découpe selon l'une quelconque des revendications 1 à 4, où ledit mécanisme de glissement présente un guide linéaire s'étendant perpendiculairement au bras robotique et croisant la direction de déplacement du couteau, ledit mécanisme d'oscillation étant monté sur le guide linéaire, et ledit moyen exerçant la force élastique est formé de ressorts pourvus sur tous les deux côtés dudit mécanisme d'oscillation ayant ledit arbre d'oscillation pour permettre au mécanisme d'oscillation de rester à une position quand aucune force ne s'exerce sur le mécanisme d'oscillation dans sa direction de glissement.

6. Un appareil de découpe de viande selon l'une quelconque des revendications 1 à 5, où ledit couteau est un couteau à deux tranchants.
